# FASCICULE DE BREVET EUROPEEN

(11) **EP 1 358 990 B1**
(45) Date de publication et mention de la délivrance du brevet: **14.06.2006**
(21) Numéro de dépôt: 03291017.6
(22) Date de dépôt: 25.04.2003
(51) Int. Cl.: B29C 45/16

(54) **Procédé de fabrication d'une lentille ayant une teinte presentant un degrade**
Verfahren zum Herstellen einer Linse welche eine graduellen Farbabstufung aufweist
Method of manufacturing a lense having a graduated colour scale

(30) Priorité: 02.05.2002 FR 0205503
(43) Date de publication de la demande: 05.11.2003
(73) Titulaire: BNL Eurolens, 01200 Bellegarde sur Valserine (FR)
(72) Inventeur: Clerc, Didier, 01200 Eloise (FR)
(74) Mandataire: Lavialle, Bruno François Stéphane

(56) Documents cités:
- GB-A- 1 163 002
- US-A- 5 523 030

## Description

La présente invention concerne un procédé de fabrication d'une lentille ayant une teinte présentant un dégradé, cette lentille étant par exemple utilisable pour constituer un verre de lunettes. Par lentille, on entend tout élément optique, correcteur ou non, destiné à équiper des lunettes ou analogues

Il existe différents types de lentilles et différents procédés de fabrication de celles-ci, comme l'illustrent notamment les documents GB-A-1 163 002 et US-A-5 523 030.

Il existe des lentilles ayant une teinte présentant un dégradé, c'est-à-dire que la teinte présente une intensité qui varie généralement du bord supérieur de la lentille vers le bord inférieur de la lentille. L'intensité de la teinte est plus forte à proximité du bord supérieur de la lentille dans la zone de la lentille qui est le plus souvent frappée directement par les rayons solaires alors que l'intensité de la teinte est plus faible à proximité du bord inférieur de la lentille de manière à minimiser son influence sur la vision de l'utilisateur.

Il est connu de réaliser de telles lentilles en associant une première couche de matériau thermoplastique teinté et une deuxième couche de matériau thermoplastique non teinté, les couches ayant des épaisseurs variant sensiblement de façon complémentaire. Il est ainsi possible de former des verres solaires, des écrans solaires, des verres teintés de correction unifocaux, des verres teintés de correction progressifs... présentant un dégradé de teinte.

Par l'invention, on entend proposer un procédé économique et fiable pour la fabrication d'une lentille de ce type.

L'invention concerne ainsi un procédé de fabrication d'une lentille ayant une teinte présentant un dégradé du bord superieur au bord inférieur, la lentille comportant des première et deuxième couches qui sont chacune réalisée en matériau thermoplastique, seule une des couches étant colorée dans la teinte concernée.

Selon l'invention, le procédé comporte les étapes de :
- injecter le matériau thermoplastique de la première couche dans une première enceinte de moulage afin de former la première couche,
- disposer la première couche dans une deuxième enceinte de moulage et y injecter le matériau thermoplastique de la deuxième couche pour former la deuxième couche sur la première couche,
les couches étant injectées de telle manière que les épaisseurs des couches varient de façon sensiblement complémentaire.

Ainsi, les deux couches sont intimement liées de manière simple et aisément reproductible. Avec ce procédé, il est possible d'obtenir des lentilles ayant une qualité optique particulièrement bonne, en permettant notamment de limiter voire annuler le risque de déviation optique entre les couches et d'obtenir de grandes séries de lentilles ayant une teinte stable.

Selon un mode de réalisation particulier, la première couche est la couche colorée dans la teinte concernée et de préférence la deuxième couche est non teintée.

Ainsi, la deuxième couche peut être taillée pour former une lentille correctrice sans altérer le dégradé de la teinte.

D'autres caractéristiques et avantages de l'invention ressortiront à la lecture de la description qui suit d'un mode de réalisation particulier non limitatif de l'invention.

Il sera fait référence aux dessins annexés, parmi lesquels :

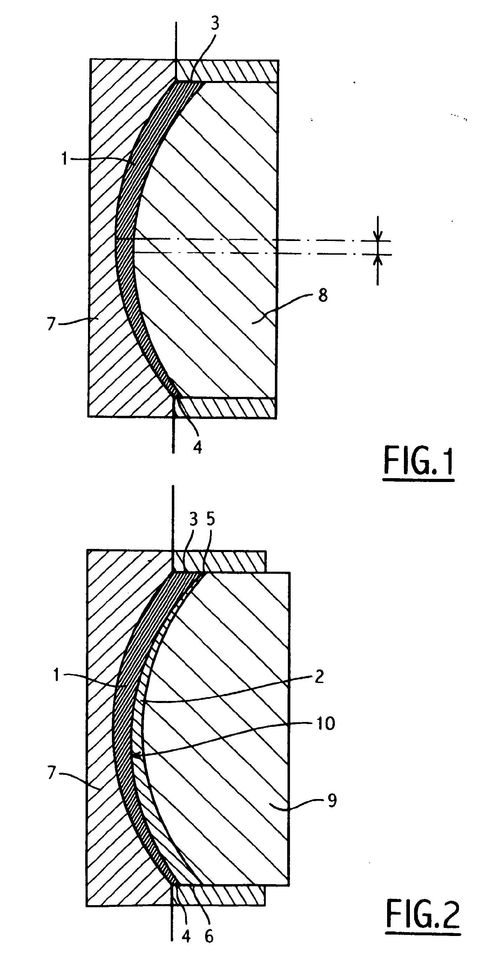

- la figure 1 est une vue schématique illustrant l'étape de moulage de la première couche de la lentille,
- la figure 2 est une vue schématique illustrant l'étape de moulage de la deuxième couche de la lentille.

En référence aux figures, le procédé conforme à l'invention est destiné à la fabrication d'une lentille qui possède une teinte présentant un dégradé et qui est destinée à équiper une paire de lunettes.

La lentille comporte une couche 1 et une couche 2. La couche 1, qui est ici destinée à se trouver sur la face avant de la paire de lunettes, est colorée dans la teinte concernée tandis que la couche 2, qui est donc ici destinée à se trouver sur la face arrière de la paire de lunettes, est non teintée. Les couches 1 et 2 ont des épaisseurs variant sensiblement de façon complémentaire à partir de leur bord supérieur vers leur bord inférieur de telle manière que la lentille ait une épaisseur constante le long de cette direction pour permettre à la lentille d'avoir une relativement bonne qualité optique, répondant aux normes optiques en vigueur. Plus précisément, l'épaisseur de la couche 1 diminue depuis son bord supérieur 3 jusqu'à son bord inférieur 4 alors que l'épaisseur de la couche 2 augmente depuis son bord supérieur 5 jusqu'à son bord inférieur 6. Les épaisseurs peuvent varier de manière linéaire ou non linéaire pour accentuer ou atténuer localement l'effet de dégradé.

Le procédé conforme à l'invention est mis en oeuvre au moyen d'une installation de moulage par injection comprenant une empreinte concave 7 et deux empreintes convexes 8, 9.

Dans un premier temps, l'empreinte concave 7 est mise en regard de l'empreinte convexe 8 pour délimiter une enceinte de moulage de la couche 1 de la lentille. Les empreintes 7 et 8 sont agencées de telle manière que la couche 1 a une épaisseur qui diminue de son bord supérieur 3 vers son bord inférieur 4 et que les empreintes 7 et 8 aient ici leurs axes décalés. Les axes des empreintes 7 et 8 peuvent également ne pas être décalés.

Un matériau thermoplastique coloré destiné à former la couche 1 est alors injecté sous forme ramollie dans l'enceinte formée par les empreintes 7 et 8. L'intensité de la teinte de la couche 1 diminue de son bord supérieur 3 à son bord inférieur 4 du fait de la diminution d'épaisseur de la couche 1 le long de cette direction.

Après durcissement du matériau thermoplastique, les empreintes 7 et 8 sont écartées l'une de l'autre. L'empreinte concave 7 est agencée de telle manière que la couche 1 reste en position dans l'empreinte concave 7.

Dans un deuxième temps, l'empreinte concave 7 est ensuite amenée en regard de l'empreinte convexe 9 de telle manière que la face concave 10 de la couche 1 délimite avec l'empreinte convexe 9 une enceinte pour former la couche 2. Le déplacement de l'empreinte concave 7 par rapport aux empreintes convexes 8 et 9 peut être obtenu en montant l'empreinte concave 7 sur un support pivotant en regard d'un plateau fixe dans lequel sont ménagées les empreintes convexes 8 et 9. Ce déplacement peut également être obtenu en montant l'empreinte concave 7 sur un support coulissant en regard d'un plateau fixe dans lequel sont ménagées les empreintes convexes 8 et 9. D'autres modes de déplacement sont envisageables et notamment des modes de déplacement résultant d'une inversion cinématique de ceux décrits.

Un matériau "thermoplastique non coloré destiné à former la couche 2 est ensuite injecté sous forme ramollie dans l'enceinte formée par la face concave 10 de la couche 1 et l'empreinte convexe 9. L'empreinte convexe 9 est agencée de telle manière que la couche 2 ait une épaisseur qui varie ici en correspondance de celle de la couche 1.

Les matériaux thermoplastiques utilisés pour les couches 1 et 2 peuvent être par exemple du type polycarbonate, polyamide, acrylique, polymétacrylate de méthyle...

La couche 1 peut en outre être réalisée à partir d'un matériau présentant des propriétés photochromiques.

Après durcissement du matériau thermoplastique formant la couche 2, la lentille est démoulée et la couche 2 est éventuellement taillée pour rendre la lentille correctrice.

Bien entendu, l'invention n'est pas limitée au mode de réalisation décrit et on peut y apporter des variantes de réalisation sans sortir du cadre de l'invention tel que défini par les revendications.

En particulier, le procédé conforme à l'invention est applicable à tout type de lentilles, et notamment aux : verres solaires non correcteurs, verres solaires correcteurs, écrans solaires, verres de correction unifocaux, verres de correction progressifs...

En outre, la couche 2 peut être colorée dans une autre teinte que celle de la couche 1 de manière à obtenir une lentille bicolore.

La couche teintée a ici une épaisseur, mesurée selon un plan horizontal de la lentille, qui est constante de telle manière que l'intensité de la teinte de la lentille soit elle aussi constante selon ce plan. La couche non teintée a ici une épaisseur, mesurée selon un plan horizontal de la lentille, qui est constante. En variante, la couche non teintée peut être plus épaisse au voisinage de son bord destiné à se trouver près du nez du porteur de lunettes et moins épaisse au voisinage de son bord destiné à se trouver du côté de l'une des branches de la paire de lunettes. Ceci permet d'obtenir un décalage latéral du centre optique de la lentille (ou décentrement) surtout utilisé dans les lentilles ayant une forte courbure. L'invention permet dans ce cas de conserver une teinte constante à la lentille, l'épaisseur de la couche teintée étant elle maintenue constante sur la largeur de la lentille.

## Revendications

1. Procédé de fabrication d'une lentille ayant une teinte présentant un dégradé du bord supérieur au bord inférieur, la lentille comportant des première et deuxième couches (1, 2) qui sont chacune réalisée en matériau thermoplastique, seule une (1) des couches (2) étant colorée dans la teinte concernée, comportant les étapes de :
- injecter le matériau thermoplastique de la première couche dans une première enceinte de moulage afin de former la première couche,
- disposer la première couche dans une deuxième enceinte de moulage et y injecter le matériau thermoplastique de la deuxième couche pour former la deuxième couche sur la première couche
les couches étant injectées de telle manière que les épaisseurs des couches varient de façcon sensiblement complémentaire.

2. Procédé de fabrication selon la revendication 1, **caractérisé en ce que** la première couche (1) est la couche colorée dans la teinte concernée.

3. Procédé de fabrication selon la revendication 2, **caractérisé en ce que** la deuxième couche (2) est non teintée.

4. Procédé de fabrication selon la revendication 2, **caractérisé en ce que** la deuxième couche (2) est colorée dans une teinte différente de celle de la première couche.

## Claims

1. A method of manufacturing a lens presenting a graded tint from a top edge towards a bottom edge, the lens comprising first and second layers (1, 2) each of which is made of a thermoplastic material, with only one of the layers (1) being colored in the tint concerned, comprising the steps of:
- injecting the thermoplastic material of the first layer into a first mold cavity in order to form the first layer; and
- placing the first layer in a second mold cavity and injecting therein the thermoplastic material of the second layer so as to form the second layer on the first layer,
the layers being injected in such a manner that the thicknesses of the layers vary in substantially complementary manner.

2. A method of manufacture according to claim 1, **characterized in that** the first layer (1) is the layer colored in the tint concerned.

3. A method of manufacture according to claim 2, **characterized in that** the second layer (2) is not tinted.

4. A method of manufacture according to claim 2, **characterized in that** the second layer (2) is colored in a tint different from the tint of the first layer.

## Patentansprüche

1. Verfahren zum Herstellen einer Linse, die eine Farbtönung hat, welche eine Abstufung vom oberen Rand zum unteren Rand aufweist, wobei die Linse eine erste und eine zweite Schicht (1, 2) umfasst, die jeweils aus thermoplastischem Material hergestellt sind, wobei nur eine (1) der Schichten (2) in der betreffenden Farbtönung gefärbt ist, umfassend die Schritte:
- Einspritzen des thermoplastischen Materials der ersten Schicht in eine erste Formkammer, um die erste Schicht auszubilden,
- Anordnen der ersten Schicht in einer, zweiten Formkammer und Einspritzen des thermoplastischen Materials der zweiten Schicht in dieselbe, um die zweite Schicht auf der ersten Schicht auszubilden,
wobei die Schichten derart eingespritzt werden, dass die Dicken der Schichten auf im wesentlichen komplementäre Weise varüeren.

2. Herstellungsverfahren nach Anspruch 1, **dadurch gekennzeichnet, dass** die erste Schicht (1) die in der betreffenden Farbtönung gefärbte Schicht ist.

3. Herstellungsverfahren nach Anspruch 2, **dadurch gekennzeichnet, dass** die zweite Schicht (2) nicht getönt ist.

4. Herstellungsverfahren nach Anspruch 2, **dadurch gekennzeichnet, dass** die zweite Schicht (2) in einer anderen Farbtönung als die erste Schicht gefärbt ist.
